# EUROPEAN PATENT APPLICATION

(11) **EP 3 984 876 A1**
(43) Date of publication of application: **20.04.2022**
(21) Application number: 19952804.3
(22) Date of filing: 04.12.2019
(51) Int. Cl.: B63B 32/10, B63H 5/07, B63B 32/60

(54) **MODULAR WATER SPORTS DEVICE**

(30) Priority: 12.11.2019 CN 201911098209
(71) Applicant: Shenzhen Waydoo Intelligence Technology Co., Ltd., Shenzhen, Guangdong 518000 (CN)
(72) Inventor: ZHU, Qiuyang, Shenzhen, Guangdong 518000 (CN); ZHU, Weijie, Shenzhen, Guangdong 518000 (CN)
(74) Representative: Dr. Gassner & Partner mbB
(86) International application number: PCT/CN2019/123043
(87) International publication number: WO 2021/093052

(57) **Abstract**

Disclosed is a modular water sports device. The modular water sports device comprises a surfboard module, the surfboard module comprising a board body; a driving module, the driving module comprising an electric motor and a propeller connected to a driving shaft of the electric motor, and the driving module being detachably connected to the board body; and a power module, the power module comprising a battery, the power module being detachably connected to the board body, and the battery and the electric motor being electrically connected. The modular water sports device in the present invention integrates the components related to the same function into corresponding functional modules, such as the surfboard module, the driving module and the power module, and the driving module and the power module are both detachably connected to the surfboard module. Compared with a method for directly and loosely assembling the components, the present embodiment can reduce the difficulty of assembly and facilitate later disassembly and maintenance.

## Description

### Cross-Reference to Related Application

The disclosure claims priority to Chinese patent application No. 201911098209.5, entitled "MODULAR WATER SPORTS DEVICE", filed to the China National Intellectual Property Administration on November 12, 2019, the disclosure of which is hereby incorporated by reference in its entirety.

### Technical Field

The present invention relates to the field of water sports, and in particular, to a modular water sports device.

### Background

With the development of science and technology, the water sports device such as an electric surfboard has gradually become popular. The water sports device includes a plurality of components such as a power device and a battery to realize the normal operation of the sports device. With the development of the technology and the increasing of functions, the components included in the sports device have a trend of gradual increase. In the related art, components responsible for different functions are assembled separately, so that the assembling difficulty is relatively high, which is not convenient for reassembly during subsequent maintenance.

### Summary

The present invention resolves one of the technical problems in the related art at least to a certain extent. To this end, the present invention provides a modular water sports device. The modular water sports device can integrate components related to some function into modules, and is convenient for maintenance.

The modular water sports device in an embodiment of the present invention includes a surfboard module, a driving module and a power module.

The surfboard module includes a board body.

The driving module includes an electric motor and a propeller connected to a driving shaft of the electric motor, and is detachably connected to the board body.

The power module includes a battery, and is detachably connected to the board body. The battery is electrically connected to the electric motor.

The modular water sports device in the embodiments of the present invention at least has the following technical effects. The components related to a same function are integrated into corresponding functional modules, such as the surfboard module, the driving module and the power module. The driving module and the power module are both detachably connected to the surfboard module. Compared with a method for directly and separately assembling the components, the present embodiment can reduce the difficulty of assembly and facilitate later disassembly and maintenance.

According to the modular water sports device in some embodiments of the present invention, a mounting groove is formed in an upper side surface of the board body. The power module is located in the mounting groove. The driving module is located on a lower side of the board body.

According to the modular water sports device in some embodiments of the present invention, the power module includes a power box. A sealing cavity can be formed in the power box. The battery is mounted in the sealing cavity. At least the upper side surface of the power box forms a contour surface of the board body.

Alternatively, the modular water sports device further includes a cover plate. The cover plate is detachably connected to the board body to close the mounting groove.

According to the modular water sports device in some embodiments of the present invention, the driving module includes a first component and a first power connection portion. A groove is formed in the first component. The first power connection portion is connected to the first component. At least part of the first power connection portion is located in the groove.

The power module includes a second component and a second power connection portion. An inserting portion is disposed on the second component. The inserting portion can be inserted in the groove. The second power connection portion is connected to the second component. At least part of the second power connection portion is located on the inserting portion.

The modular water sports device further includes a sealing member. When the inserting portion is inserted in the groove and the first power connection portion is electrically connected to the second power connection portion, the sealing member is located between the inserting portion and the groove.

According to the modular water sports device in some embodiments of the present invention, the first power connection portion includes a conductive inserting needle extending from a bottom surface of the groove to an opening of the groove and a first conductive portion extending from other walls on the first component different from a side in which the opening is located. The second power connection portion includes a conductive socket extending from an end surface of the inserting portion and a second conductive portion extending from other walls on the second component different from a side at which the inserting portion is located. The conductive inserting needle is inserted in the conductive socket.

According to the modular water sports device in some embodiments of the present invention, the mounting groove is formed in the upper side surface of the board body. A power connection hole is formed in a groove bottom of the mounting groove. The power module is located in the mounting groove. The driving module is located on a lower side of the board body. The first power connection portion is electrically connected to the second power connection portion by means of the power connection hole.

According to the modular water sports device in some embodiments of the present invention, the driving module further includes a mounting box, a connecting rod and an electric motor support. The first component is in sealed connection with the mounting box. The electric motor is connected to the electric motor support. An end of the connecting rod is connected to the mounting box, and the other end of the connecting rod is connected to electric motor support. A trace channel communicating with an inner cavity of the mounting box is disposed in the connecting rod.

According to the modular water sports device in some embodiments of the present invention, the modular water sports device further includes a locking device. A threaded hole is formed in the surfboard module. A through hole is formed in the driving module corresponding to the threaded hole. An annular flange is further disposed on the driving module in a circumferential direction of the through hole. A gap is formed in the flange.

The locking device includes a locking member, a handle and an elastic member. A head end of the locking member is provided with a threaded portion capable of penetrating the through hole and screwing into the threaded hole. The handle is connected to the locking member. The handle located in the gap is moved in an axial direction of the locking member to pass over the flange, and can drive the locking member to rotate. The elastic member resets the handle in the gap when the handle is rotated above the gap.

According to the modular water sports device in some embodiments of the present invention, guiding slopes are arranged on two ends of the flange.

According to the modular water sports device in some embodiments of the present invention, at least one positioning plane is arranged on an outer wall of the locking member. The handle includes a sleeving portion sleeved on the locking member. At least one limit plane against the positioning plane is disposed on an inner wall of the sleeving portion.

### Brief Description of the Drawings

Fig. 1 is a three-dimensional schematic diagram of a water sports device according to a first embodiment of the present invention.
Fig. 2 is a schematic exploded view of Fig. 1.
Fig. 3 is a three-dimensional schematic diagram showing a top of a first component according to a fifth embodiment of the present invention.
Fig. 4 is a three-dimensional schematic diagram of a second component according to the fifth embodiment of the present invention.
Fig. 5 is a schematic exploded view of a water sports device according to a seventh embodiment of the present invention.
Fig. 6 is a three-dimensional schematic diagram showing a bottom of the first component according to the seventh embodiment of the present invention.
Fig. 7 is a three-dimensional schematic diagram of a mounting box according to the seventh embodiment of the present invention.
Fig. 8 is a three-dimensional schematic diagram of a connection between a power box and a second component according to a ninth embodiment of the present invention.
Fig. 9 is a schematic exploded view in another direction of Fig. 8.
Fig. 10 is a three-dimensional schematic diagram of a locking member according to a tenth embodiment of the present invention.
Fig. 11 is a three-dimensional schematic diagram of a connection among a locking member, a handle and an elastic member according to the tenth embodiment of the present invention.
Fig. 12 is a schematic exploded view of Fig. 11.
Fig. 13 is a schematic cross-sectional view in an A-A direction in Fig. 12.
Fig. 14 is an enlarged schematic diagram of a joint that a driving module is connected to a power module by using a locking device according to the tenth embodiment of the present invention.

### Detailed Description of the Embodiments

This section will describe the embodiments of the present invention in detail. The embodiments of the present invention are shown in the accompanying drawings. The function of the accompanying drawings is to supplement the description of the text part of the specification with graphics, so that the description of each technical features and the overall technical solutions of the embodiments of the present invention can be understood intuitively and vividly, and should not be understood as limits to the present invention.

In the descriptions of the present invention, if an orientation description is involved, such as "up", "down", "front", "rear", "left", "right" and the like are orientation or position relationships shown in the drawings, are adopted not to indicate or imply that indicated devices or components must be in specific orientations or structured and operated in specific orientations but only to conveniently describe the present invention and simplify descriptions and thus should not be understood as limits to the present invention. If a feature is referred to be "set", "fixed", or "connected" to another feature, it can be directly set, fixed, or connected to another feature, or indirectly set, fixed, or connected to another feature.

In the description of the embodiments of the present invention, if it refers to "several", it means more than one; if it refers to "a plurality of", it means more than two; if it refers to "greater than", "less than", and "exceeding", it should be understood as not including the current number; and if it refers to "over", "below" and "within" should be understood as including the current number. If "first" and "second" are involved, it should be understood as used to distinguish technical features, but cannot be understood to indicate or imply relative importance or implicitly indicate the number of indicated technical features or implicitly indicate the precedence relation of the technical features.

In addition, unless otherwise defined, the technical and scientific terms used in the embodiments of the present invention have the same meanings as commonly understood by those skilled in the art. The terms used in the present invention are merely used to describe specific embodiments, not to limit the present invention.

### First embodiment

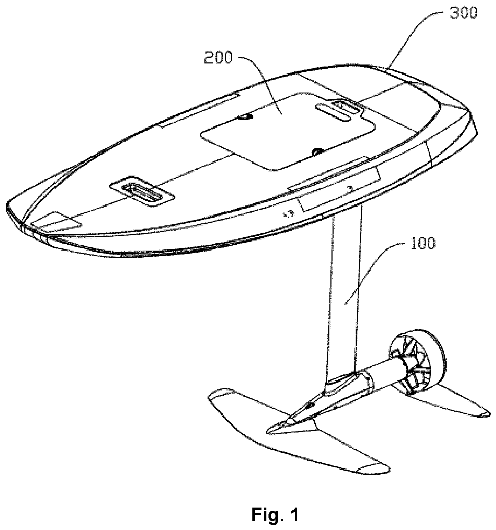

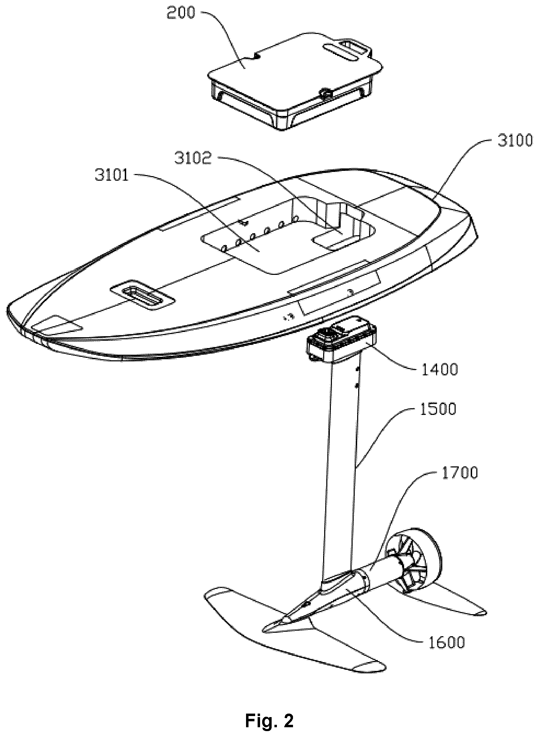

Referring to Fig. 1 and Fig. 2, Fig. 1 shows a three-dimensional schematic diagram of a water sports device according to a first embodiment of the present invention. Fig. 2 is a schematic exploded view of Fig. 1. The water sports device in the present embodiment includes a driving module 100, a power module 200 and a surfboard module 300. The driving module 100 and the power module 200 are detachably connected to the surfboard module 300. The driving module 100 is an integration of various components configured to provide power, and includes, but is not limited to, an electric motor, a propeller, a control panel and the like. The power module 200 is an integration of various components configured to provide a power supply, and includes, but is not limited to, a battery, a battery management system and the like. The surfboard module 300 is an integration of various components configured for supporting, and includes, but is not limited to, a board body. In the present embodiment, components related to a same function may be assembled to form corresponding functional modules in advance, and then the functional modules are assembled into a complete machine. Compared with a method for directly and separately assembling the components, the phased and regional assembly of the water sports device can be realized in the present embodiment, for example, various functional modules can be produced by different manufactures, and then are assembled uniformly, alternatively, the various functional modules can be produced by the manufactures, and then are assembled uniformly by a user. Therefore, transportation and storage costs are reduced. In addition, when some functional module fails, it merely needs to dismount the entire functional module, so that convenient later maintenance is achieved.

The electric motor, the propeller, the control panel, the battery, the battery management system and the board body involved in the present embodiment may all adopt well-known technologies, which are not described in detail herein.

### Second embodiment

The present embodiment is an improvement on the basis of the first embodiment. Referring to Fig. 2, the surfboard module 300 in the present embodiment includes the board body 3100. A mounting groove 3101 is formed in an upper side surface of the board body 3100. The power module 200 is located in the mounting groove 3101. The driving module 100 is located on a lower side of the board body 3100. During dismounting, the power module 200 is separated from the board body 3100 upwards. The driving module 100 is separated from the board body 3100 downwards. Therefore, mutual interference among the modules can be avoided, and independent dismounting among the modules is realized.

### Third embodiment

The present embodiment is an improvement on the basis of the second embodiment. Referring to Fig. 2, the power module 200 in the present embodiment is a water-proof power module, that is, the power module 200 is a power box. A sealing cavity can be formed in the power box. The battery of the power module 200 is mounted in the sealing cavity. Therefore, in the present embodiment, the power module 200 can be directly placed in the mounting groove 3101. In this case, an upper side surface of the power box has a same height as the upper side surface of the board body 3100, that is, the upper side surface of the power box forms a contour surface of the board body 3100. Therefore, a dismounting step can be further simplified.

It can be understood that, the upper side surface of the power box may further protrude or recess relative to the upper side surface of the board body 3100, as long as it ensures that the power box is directly exposed to an outside of the board body 3100.

### Fourth embodiment

The present embodiment is an improvement on the basis of the second embodiment. The surfboard module 300 in the present embodiment further includes a cover plate. The cover plate is detachably connected to the board body 3100 to close the mounting groove 3101. In the present embodiment, external liquid is isolated by means of the cover plate, so that the power module 200 without a water-proof function can be selected.

### Fifth embodiment

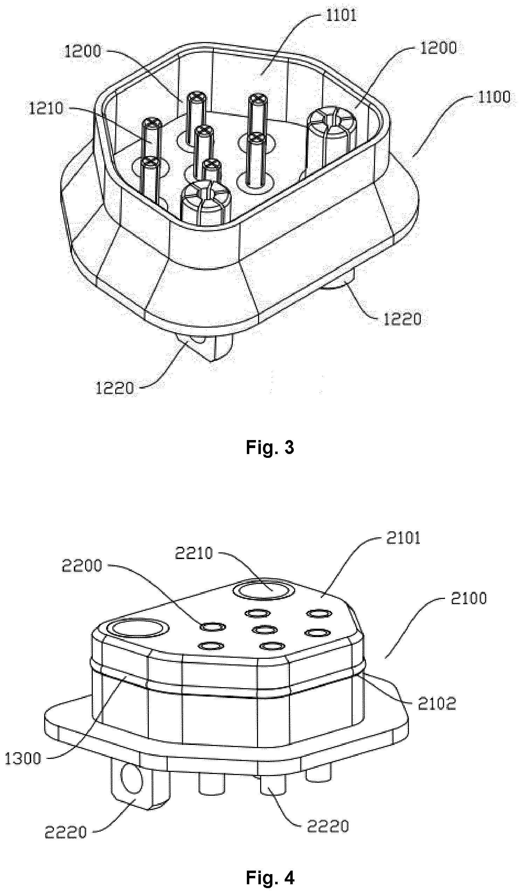

The present embodiment is an improvement on the basis of the first embodiment. Fig. 3 shows a three-dimensional schematic diagram showing a top of a first component according to a fifth embodiment of the present invention. The driving module 100 in the present embodiment includes a first component 1100. A groove 1101 is formed in the first component 1100, and forms an opening in a top end surface of the first component 1100. The first component 1100 is further connected to a first power connection portion 1200. Specifically, the first power connection portion 1200 is located in the groove 1101, and is configured to come into contact with an external conductive component to transmit electric energy.

Fig. 4 shows a three-dimensional schematic diagram of a second component according to the fifth embodiment of the present invention. The power module 200 in the present embodiment includes a second component 2100. An inserting portion 2101 is disposed on the second component 2100. The second component 2100 is further connected to a second power connection portion 2200. Specifically, the second power connection portion 2200 is located on the inserting portion 2101, and is configured to come into contact with the external conductive component to transmit the electric energy.

In the present embodiment, an annular first sealing groove 2102 is formed in an outer sidewall of the inserting portion 2101 in a circumferential direction of the inserting portion 2101. The annular first sealing groove 2102 is connected to a sealing member 1300. In the present embodiment, the sealing member 1300 is an annular sealing ring. One part of the sealing ring is located in the first sealing groove 2102, and the other part of the sealing ring extends from the first sealing groove 2102. In the present embodiment, during use, the inserting portion 2101 is inserted into the groove 1101. The first power connection portion 1200 comes into contact with the second power connection portion 2200 to realize conduction. The sealing member 1300 simultaneously bears against a sidewall of the groove 1101 and a groove bottom of the first sealing groove 2102 to form a sealing structure. Referring to Fig. 2, a power connection hole 3102 is formed in a groove bottom of the mounting groove 3101. After the driving module 100 is connected to the power module 200, the first power connection portion 1200 is connected to the second power connection portion 2200 at the power connection hole 3102. The first power connection portion 1200 and the second power connection portion 2200 may be sealed in a water-proof cavity. Since the water-proof cavity is formed between the first component 1100 and the second component 2100, water resistance is performed on a joint on the basis of conduction. In the present embodiment, by inserting the inserting portion 2101 into the groove 1101, a guiding effect can also be achieved, so that convenient docking of the first power connection portion 1200 and the second power connection portion 2200 is realized.

By combining the present embodiment with the fourth embodiment or the fifth embodiment, the water proof of the power module 200 and a junction of the power module 200 and the driving module 100 can be realized, which is applicable to the usage scenario of using the water sports device.

It can be understood that, in other embodiments, a connection position of the sealing member 1300 can be changed. For example, an annular second sealing groove is formed in an inner sidewall of the groove 1101 in a circumferential direction of the groove 1101, the sealing member 1300 is connected to the inner sidewall of the groove 1101 through the second sealing groove. Therefore, the sealing between the first component 1100 and the second component 2100 can be realized as well.

### Sixth embodiment

Referring to Fig. 3 and Fig. 4, the present embodiment is an improvement of the fifth embodiment. In the present embodiment, a through hole (not shown in the figure) is formed in a bottom of the groove 1101. The first power connection portion 1200 is inserted into the through hole at the bottom of the groove 1101, and includes a conductive inserting needle 1210 extending from a bottom surface of the groove 1101 to an opening of the groove 1101 and a first conductive portion 1220 extending from other walls on the first portion 1100 different from a side in which the opening of the groove 1101 is located. The other walls described here may be sidewalls of the first component 1100, or may be a bottom wall of the first component 1100.

A through hole (not shown in the figure) is formed in the inserting portion 2101. The second power connection portion 2200 is inserted into the through hole in the inserting portion 2101, and includes a conductive socket 2210 extending from an end surface of the inserting portion 2101 and a second conductive portion 2220 extending from other walls on the second component 2100 different from a side in which the inserting portion 2101 is located. The other walls described here may be sidewalls of the second component 2100, or may be a bottom wall of the second component 2100.

In the present embodiment, the conductive contact between the first power connection portion 1200 and the second power connection portion 2200 is to insert the conductive inserting needle 1210 into the conductive socket 2210. Therefore, the stable conduction between the power connection portions can be realized.

In other embodiments, the first conductive portion 1220 is coaxial with the conductive inserting needle 1210. The second conductive portion 2220 is coaxial with the conductive socket 2210. Therefore, it may adapt to an assembly mode in which the water sports device is assembled sequentially in a single direction.

### Seventh embodiment

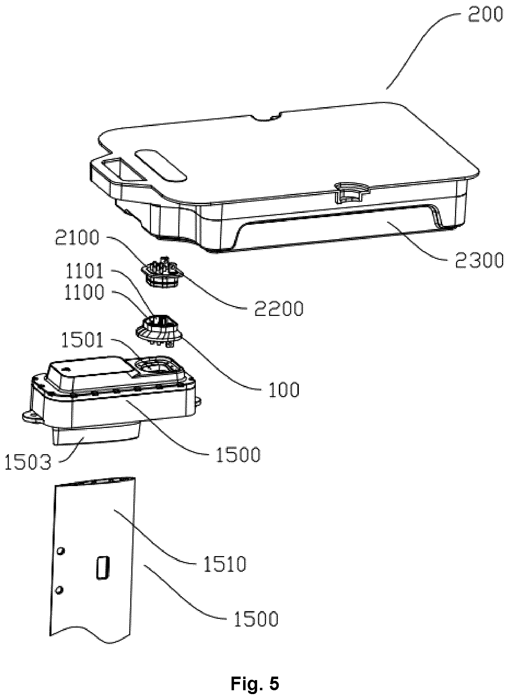

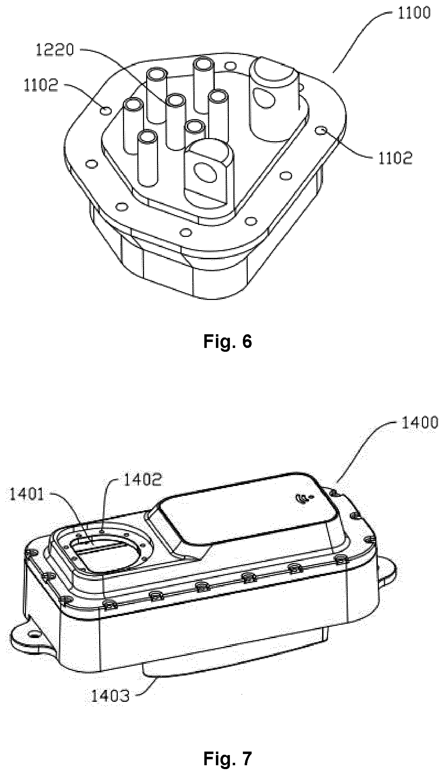

The present embodiment is an improvement of the fifth embodiment. Referring to Fig. 5 and Fig. 6, Fig. 5 shows a schematic exploded view of a water sports device according to a seventh embodiment of the present invention. Fig. 6 shows a three-dimensional schematic diagram showing a bottom of the first component according to the seventh embodiment of the present invention. In the present embodiment, a plurality of threaded holes 1102 are formed in a bottom of the first component 1100 in a circumferential direction. The threaded holes 1102 are arranged densely.

In the present embodiment, the driving module 100 further includes a mounting box 1400. The mounting box 1400 is configured to fix the first component 1100. Referring to Fig. 7, Fig. 7 shows a three-dimensional schematic diagram of a mounting box according to the seventh embodiment of the present invention. Atop of the mounting box 1400 is provided with a first mounting hole 1401. In a circumferential direction of the first mounting hole 1401, a plurality of through holes 1402 are formed in the mounting box 1400. Positions and quantities of the through holes 1402 correspond to the threaded holes 1102.

Referring to Fig. 5, during connection, the first component 1100 is located at the first mounting hole 1401. A bottom end surface of the first component 1100 bears against a top end surface of the mounting box 1400, and is fastened by using a threaded fastener. In this case, the groove 1101 is exposed from the first mounting hole 1401, and the first conductive portion 1220 is located in the mounting box 1400. Since the threaded holes 1102 and through holes 1402 are arranged densely, the bottom end surface of the first component 1100 can be tightly attached to the top end surface of the mounting box 1400. In addition, a sealing gasket may be disposed between the first component 1100 and the mounting box 1400, so as to further increase sealing performance.

### Eighth embodiment

Referring to Fig. 1 and Fig. 5, the present embodiment is an improvement of the seventh embodiment. In the present embodiment, a protruding portion 1403 is further disposed at a bottom of the mounting box 1400. A bottom of the protruding portion 1403 is provided with a second mounting hole (not shown). The second mounting hole is communicated with an inner cavity of the mounting box 1400.

In the present embodiment, the driving module 100 further includes a connecting rod 1500 and an electric motor support 1600. An electric motor 1700 is connected to the electric motor support 1600. One end of the connecting rod 1500 is inserted in the second mounting hole at the bottom of the mounting box 1400, and the other end of the connecting rod is connected to the electric motor support 1600. The connecting rod 1500 can cause heavy components, such as the electric motor 1700 and the electric motor support 1600 to be located under the board body 3100 and away from the board body 3100. Therefore, the center of gravity of the water sports device is reduced, and stability is enhanced. A trace channel is disposed in the connecting rod 1500, and is communicated with the inner cavity of the mounting box 1400 through the second mounting hole. Therefore, a lead connected to the first conductive portion 1220 may be connected to the electric motor by using the trace channel, thereby realizing the transmission of the electric energy. A sealing connection between the connecting rod 1500 and the mounting box 1400 may adopt manners such as adhesive sealing, sealing ring sealing and the like.

### Ninth embodiment

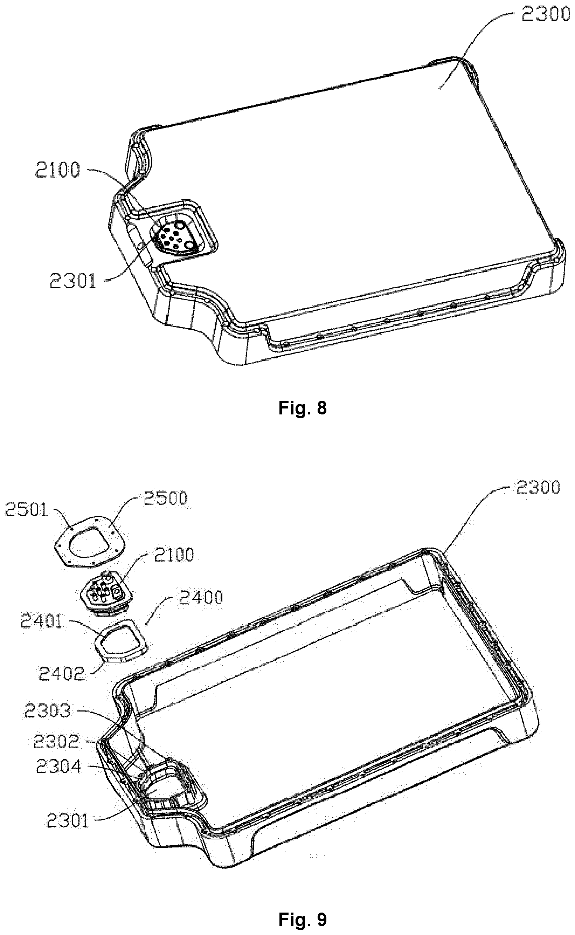

The present embodiment is an improvement of the fifth embodiment. Referring to Fig. 8 and Fig. 9, Fig. 8 shows a three-dimensional schematic diagram of a connection between a power box and a second component according to a ninth embodiment of the present invention. Fig. 9 is a schematic exploded view in another direction of Fig. 8. In the present embodiment, the power module 200 includes a power box 2300. A bottom of the power box 2300 is provided with a mounting hole 2301. In a circumferential direction of the mounting hole 2301, an annular flange 2302 is disposed on an inner wall of the power box 2300. A circle of densely arranged connecting columns 2303 having threaded holes are disposed outside the flange 2302. A sealing groove 2304 is formed inside the flange 2302.

In the present embodiment, a sealing gasket 2400 is further disposed. The sealing gasket 2400 includes a connecting portion 2401 and a sealing portion 2402. The connecting portion 2401 is tightly sleeved outside the second component 2100 through elastic force element. The sealing portion 2402 can be embedded in the sealing groove 2304 to realize sealing.

In the present embodiment, a pressing plate 2500 is further disposed. A plurality of through holes 2501 are formed in the pressing plate 2500. Positions and quantities of the through holes 2501 correspond to the connecting columns 2303. During connection, the second component 2100 is located in the mounting hole 2301. The sealing gasket 2400 is connected between the second component 2100 and the flange 2302. The pressing plate 2500 is finally pressed on a top of the flange 2302, and is fastened through a threaded fastener. Therefore, the second component 2100 can be driven to squeeze the sealing gasket 2400, so as to realize the sealing between the second component 2100 and the power box 2300.

### Tenth embodiment

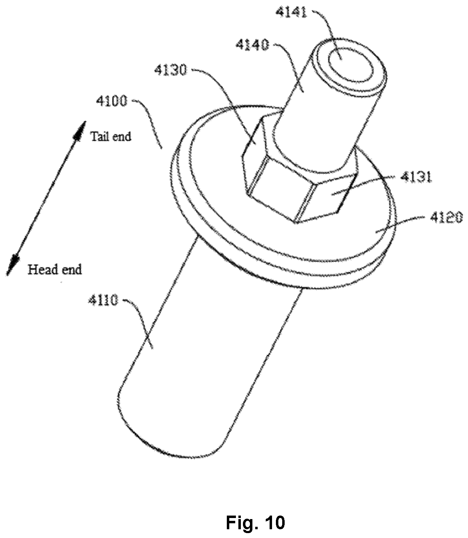

The present embodiment is an improvement of the first embodiment. In the present embodiment, a locking device is further disposed. Fig. 10 shows a three-dimensional schematic diagram of a locking member according to a tenth embodiment of the present invention. The locking device in the present embodiment includes a locking member 4100. The locking member 4100 is roughly in a long rod-shaped structure. A head end of the locking member is provided with a threaded portion 4110. The threaded portion 4110 is provided with an external thread (not shown). A baffle block 4120 is disposed in the middle of the locking member 4100. The baffle block 4120 is in a disc-shaped structure and extends in a radial direction of the locking member. A positioning portion 4130 is further disposed at a position of the locking member 4100 close to the baffle block 4120 and facing the head end of the locking member 4100. An outer sidewall of the positioning portion 4130 has a plurality of positioning planes 4131. The positioning planes 4131 are uniformly distributed in a circumferential direction of the positioning portion 4130 (the locking member 4100), that is, a cross section of the positioning portion 4130 is a regular polygon, and specifically a regular hexagon. A tail end of the locking member 4100 is provided with a connecting portion 4140. An axial threaded hole 4141 is formed inside the connecting portion 4140.

It can be understood that, in other embodiments of the present invention, at least one positioning plane 4131 can be disposed on an outer sidewall of the locking member 4100. That is to say, an outer contour of the locking member 4100 at the portion is a closed figure formed by a major arc and a straight line.

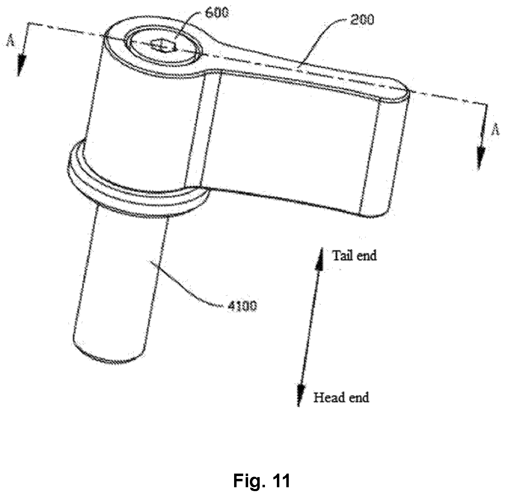

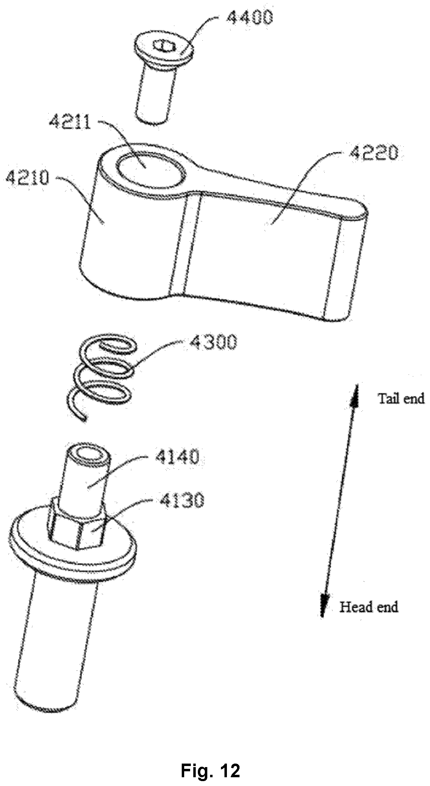

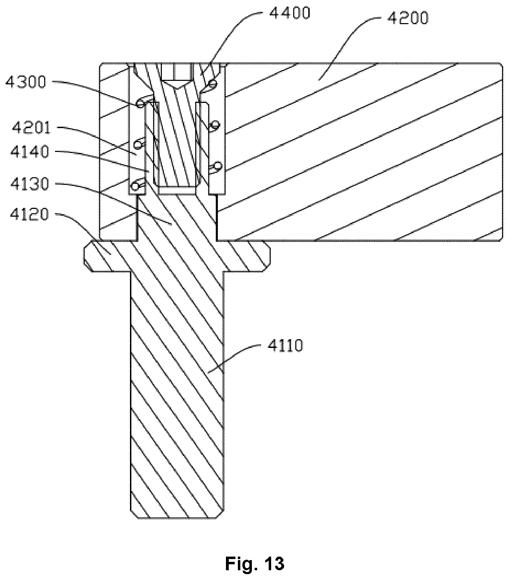

Referring to Fig. 11 to Fig. 13, Fig. 11 shows a three-dimensional schematic diagram of a connection among a locking member, a handle and an elastic member according to the tenth embodiment of the present invention. Fig. 12 shows a schematic exploded view of Fig. 11. Fig. 13 shows a schematic cross-sectional view in an A-A direction in Fig. 12. In the present embodiment, a handle 4200 includes a sleeving portion 4210 and a protruding portion 4220. The protruding portion 4220 is connected to an outer sidewall of the sleeving portion 4210, and extends in a radial direction of the sleeving portion 4210. An axial through hole 4211 is formed inside the sleeving portion 4210. A head end of the through hole 4211 is a regular hexagon hole, and a tail end of the through hole is a circular hole. A hole wall of the regular hexagon hole, which is also an inner wall of the sleeving portion 4210, can be regarded as a plurality of limit planes distributed in a circumferential direction. A diameter of a circumcircle of the regular hexagon hole is not less than a diameter of the circular hole. That is to say, a junction of the regular hexagon hole and the circular hole has a step surface.

During connection, the sleeving portion 4210 is sleeved on the tail end of the locking member 4100. Specifically, the positioning portion 4130 is inserted in the regular hexagon hole, and the connecting portion 4140 is inserted in the circular hole. A gap 4201 is formed between the connecting portion 4140 and the circular hole. An elastic member 4300 is located in the gap 4201. One end of the elastic member 4300 bears against the step surface, and the other end of the elastic member bears against a screw 4400 screwing in the threaded hole 4141. Based on the above structure, the handle 4200 can mutually bear against the limit planes through the positioning planes 4131 to drive the locking member 4100 to rotate. In addition, the handle 4200 can also be moved in an axial direction relative to the locking member 4100. In addition, when the handle 4200 is moved along the tail end of the locking member 4100 relative to the locking member 4100, the elastic member 4300 is gradually compressed with the movement of the handle 4200. The compressed elastic member 4300 can drive the handle 4200 to reset after an external force for driving the movement of the handle 4200 is vanished.

In the present embodiment, the elastic member 4300 is a spring. In the present embodiment, the handle 4200 is sleeved on the tail end of the locking member 4100. The elastic member 4300 is placed between a sleeving part of the handle 4200 and the locking member 4100, which is to reduce the volume of the entire locking device. In addition, in the present embodiment, the elastic member 4300 is fixed by means of the screw 4400 screwing in the threaded hole 4141. After the screw 4400 is screwed out, the elastic member 4300 and the handle 4200 can be successively taken out. Therefore, a compact structure and convenient disassembly are achieved.

It can be understood that, in the present embodiment, the quantity of the limit planes corresponds to the quantity of the positioning planes 4131.

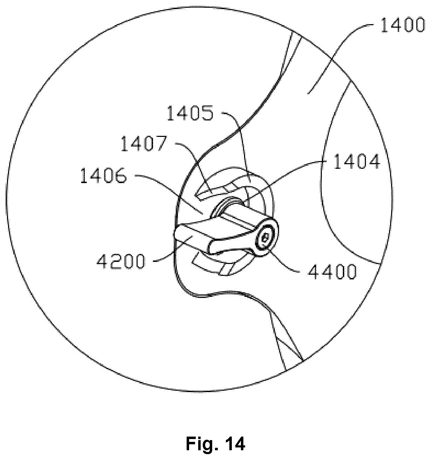

Fig. 14 shows an enlarged schematic diagram of a joint that a driving module is connected to a power module by using a locking device according to the tenth embodiment of the present invention. The surfboard module 300 (for example, the board body 3100 in the present embodiment) is provided with a threaded hole which is not shown. The driving module 100 (for example, the mounting box 1400 in the present embodiment) is provided with a through hole 1404 corresponding to the threaded hole. An annular flange 1405 is disposed on the mounting box 1400 in a circumferential direction of the through hole 1404. A gap 1406 is formed in the flange 1405, that is, the flange 1405 is an incomplete annular structure.

During use, the threaded portion 4110 of the locking member 4100 passes through the through hole 1404 and is screwed in the threaded hole, until the baffle block 4120 bears against the mounting box 1400. In this case, the fixation between the board body 3100 and the mounting box 1400 is completed. In addition, the handle 4200 is placed in the gap 1406. Due to the bearing against effect of two ends of the flange 1405, the handle 4200 can be merely swung in the gap 1406 with a small extent. If a size of the gap 1406 is set to be small enough, the handle 4200 can even stand still in the gap 1406. Therefore, the locking member 4100 cannot be rotated in the circumferential direction, to avoid the locking member 4100 from loosening. When it is to be disassembled, the handle 4200 is lifted along the tail end of the locking member 4100 (i.e. upwards), until the handle 4200 passes over the flange. In this case, the handle 4200 can be freely turned, so that the locking member 4100 can be driven to separate from the threaded hole.

### Eleventh embodiment

The present embodiment is an improvement of the tenth embodiment. Referring to Fig. 14, two ends of the flange 1405 are both provided with guiding slopes 1407. When enough rotational torque is applied to the gap 1406, the handle 4200 can be gradually escalated by moving along the guiding slopes 1407, until the handle is moved to a top surface of the flange 1405. Therefore, it is not necessary to always apply an upward acting force to the handle 4200 to overcome the elastic force of the elastic member 4300, and more convenient operation is achieved.

The embodiments of the present invention are described in detail above, but the present invention is not limited to the described embodiments. Those skilled in the art can make various equivalent modifications or replacements without departing from the spirit of the present invention. These equivalent modifications or replacements all fall in the scope defined by the claims of this application. In addition, in the case of no conflict, the embodiments of the present invention and features in the embodiments may be combined with one another without conflict.

## Claims

1. A modular water sports device, comprising:
a surfboard module, comprising a board body;
a driving module, comprising an electric motor and a propeller connected to a driving shaft of the electric motor, wherein the driving module is detachably connected to the board body; and
a power module, comprising a battery, wherein the power module is detachably connected to the board body, and the battery is electrically connected to the electric motor.

2. The modular water sports device according to claim 1, wherein a mounting groove is formed in an upper side surface of the board body, the power module is located in the mounting groove, and the driving module is located on a lower side of the board body.

3. The modular water sports device according to claim 2, wherein the driving module comprises a first component and a first power connection portion, wherein a groove is formed in the first component, the first power connection portion is connected to the first component, and at least part of the first power connection portion is located in the groove;
the power module comprises a second component and a second power connection portion, wherein an inserting portion is disposed on the second component, the inserting portion is inserted in the groove, the second power connection portion is connected to the second component, and at least part of the second power connection portion is located on the inserting portion; and
the modular water sports device further comprises a sealing member, and when the inserting portion is inserted in the groove and the first power connection portion is electrically connected to the second power connection portion, the sealing member is located between the inserting portion and the groove.

4. The modular water sports device according to claim 2, wherein the modular water sports device further comprises a locking device, a threaded hole is formed in the surfboard module, a through hole is formed in the driving module corresponding to the threaded hole, an annular flange is further disposed on the driving module in a circumferential direction of the through hole, and a gap is formed in the flange; and
the locking device comprises a locking member, a handle and an elastic member, a head end of the locking member is provided with a threaded portion penetrating the through hole and screwing into the threaded hole, the handle is connected to the locking member, the handle located in the gap is moved in an axial direction of the locking member to pass over the flange and drives the locking member to rotate, and the elastic member resets the handle in the gap when the handle is rotated above the gap.

5. The modular water sports device according to claim 2, wherein the power module comprises a power box, wherein a sealing cavity is formed in the power box, the battery is mounted in the sealing cavity, and at least the upper side surface of the power box forms a contour surface of the board body; alternatively,
the modular water sports device further comprises a cover plate, wherein the cover plate is detachably connected to the board body to close the mounting groove.

6. The modular water sports device according to claim 5, wherein the driving module comprises a first component and a first power connection portion, wherein a groove is formed in the first component, the first power connection portion is connected to the first component, and at least part of the first power connection portion is located in the groove;
the power module comprises a second component and a second power connection portion, wherein an inserting portion is disposed on the second component, the inserting portion is inserted in the groove, the second power connection portion is connected to the second component, and at least part of the second power connection portion is located on the inserting portion; and
the modular water sports device further comprises a sealing member, and when the inserting portion is inserted in the groove and the first power connection portion is electrically connected to the second power connection portion, the sealing member is located between the inserting portion and the groove.

7. The modular water sports device according to claim 5, wherein the modular water sports device further comprises a locking device, a threaded hole is formed in the surfboard module, a through hole is formed in the driving module corresponding to the threaded hole, an annular flange is further disposed on the driving module in a circumferential direction of the through hole, and a gap is formed in the flange; and
the locking device comprises a locking member, a handle and an elastic member, a head end of the locking member is provided with a threaded portion penetrating the through hole and screwing into the threaded hole, the handle is connected to the locking member, the handle located in the gap is moved in an axial direction of the locking member to pass over the flange and drives the locking member to rotate, and the elastic member resets the handle in the gap when the handle is rotated above the gap.

8. The modular water sports device according to claim 1, wherein the driving module comprises a first component and a first power connection portion, wherein a groove is formed in the first component, the first power connection portion is connected to the first component, and at least part of the first power connection portion is located in the groove;
the power module comprises a second component and a second power connection portion, wherein an inserting portion is disposed on the second component, the inserting portion is inserted in the groove, the second power connection portion is connected to the second component, and at least part of the second power connection portion is located on the inserting portion; and
the modular water sports device further comprises a sealing member, and when the inserting portion is inserted in the groove and the first power connection portion is electrically connected to the second power connection portion, the sealing member is located between the inserting portion and the groove.

9. The modular water sports device according to claim 8, wherein the modular water sports device further comprises a locking device, a threaded hole is formed in the surfboard module, a through hole is formed in the driving module corresponding to the threaded hole, an annular flange is further disposed on the driving module in a circumferential direction of the through hole, and a gap is formed in the flange; and
the locking device comprises a locking member, a handle and an elastic member, a head end of the locking member is provided with a threaded portion penetrating the through hole and screwing into the threaded hole, the handle is connected to the locking member, the handle located in the gap is moved in an axial direction of the locking member to pass over the flange and drives the locking member to rotate, and the elastic member resets the handle in the gap when the handle is rotated above the gap.

10. The modular water sports device according to claim 8, wherein the first power connection portion comprises a conductive inserting needle extending from a bottom surface of the groove to an opening of the groove and a first conductive portion extending from other walls on the first component different from a side in which the opening is located, the second power connection portion comprises a conductive socket extending from an end surface of the inserting portion and a second conductive portion extending from other walls on the second component different from a side at which the inserting portion is located, and the conductive inserting needle is inserted in the conductive socket.

11. The modular water sports device according to claim 10, wherein the modular water sports device further comprises a locking device, a threaded hole is formed in the surfboard module, a through hole is formed in the driving module corresponding to the threaded hole, an annular flange is further disposed on the driving module in a circumferential direction of the through hole, and a gap is formed in the flange; and
the locking device comprises a locking member, a handle and an elastic member, a head end of the locking member is provided with a threaded portion penetrating the through hole and screwing into the threaded hole, the handle is connected to the locking member, the handle located in the gap is moved in an axial direction of the locking member to pass over the flange and drives the locking member to rotate, and the elastic member resets the handle in the gap when the handle is rotated above the gap.

12. The modular water sports device according to claim 8, wherein a mounting groove is formed in an upper side surface of the board body, a power connection hole is formed in a groove bottom of the mounting groove, the power module is located in the mounting groove, the driving module is located on a lower side of the board body, and the first power connection portion is electrically connected to the second power connection portion by means of the power connection hole.

13. The modular water sports device according to claim 12, wherein the modular water sports device further comprises a locking device, a threaded hole is formed in the surfboard module, a through hole is formed in the driving module corresponding to the threaded hole, an annular flange is further disposed on the driving module in a circumferential direction of the through hole, and a gap is formed in the flange; and
the locking device comprises a locking member, a handle and an elastic member, a head end of the locking member is provided with a threaded portion penetrating the through hole and screwing into the threaded hole, the handle is connected to the locking member, the handle located in the gap is moved in an axial direction of the locking member to pass over the flange and drives the locking member to rotate, and the elastic member resets the handle in the gap when the handle is rotated above the gap.

14. The modular water sports device according to claim 8, wherein the driving module further comprises a mounting box, a connecting rod and an electric motor support, the first component is in sealed connection with the mounting box, the electric motor is connected to the electric motor support, an end of the connecting rod is connected to the mounting box and the other end of the connecting rod is connected to electric motor support, and a trace channel communicating with an inner cavity of the mounting box is disposed in the connecting rod.

15. The modular water sports device according to claim 14, wherein the modular water sports device further comprises a locking device, a threaded hole is formed in the surfboard module, a through hole is formed in the driving module corresponding to the threaded hole, an annular flange is further disposed on the driving module in a circumferential direction of the through hole, and a gap is formed in the flange; and
the locking device comprises a locking member, a handle and an elastic member, a head end of the locking member is provided with a threaded portion penetrating the through hole and screwing into the threaded hole, the handle is connected to the locking member, the handle located in the gap is moved in an axial direction of the locking member to pass over the flange and drives the locking member to rotate, and the elastic member resets the handle in the gap when the handle is rotated above the gap.

16. The modular water sports device according to claim 1, wherein the modular water sports device further comprises a locking device, a threaded hole is formed in the surfboard module, a through hole is formed in the driving module corresponding to the threaded hole, an annular flange is further disposed on the driving module in a circumferential direction of the through hole, and a gap is formed in the flange; and
the locking device comprises a locking member, a handle and an elastic member, a head end of the locking member is provided with a threaded portion penetrating the through hole and screwing into the threaded hole, the handle is connected to the locking member, the handle located in the gap is moved in an axial direction of the locking member to pass over the flange and drives the locking member to rotate, and the elastic member resets the handle in the gap when the handle is rotated above the gap.

17. The modular water sports device according to claim 16, wherein guiding slopes are arranged on two ends of the flange.

18. The modular water sports device according to claim 16, wherein at least one positioning plane is arranged on an outer wall of the locking member, the handle comprises a sleeving portion sleeved on the locking member, and at least one limit plane against the positioning plane is disposed on an inner wall of the sleeving portion.
